# EUROPEAN PATENT APPLICATION

(11) **EP 2 410 176 A2**
(43) Date of publication of application: **25.01.2012**
(21) Application number: 10722377.8
(22) Date of filing: 02.03.2010
(51) Int. Cl.: F03D 11/04

(54) **FLOATING PLATFORM FOR EXTRACTING WIND ENERGY**

(30) Priority: 17.03.2009 ES 200900735
(71) Applicant: APIA XXI, S.A., 39005 Santander (ES)
(72) Inventor: PANTALEON PRIETO, Marcos J., E-39005 Santander (ES); RAMOS GUITERREZ, Oscar Ramon, E-39005 Santander (ES); GUTIERREZ MARTINEZ, Miguel Angel, E-39005 Santander (ES)
(74) Representative: Temino Ceniceros, Ignacio
(86) International application number: PCT/ES2010/070112
(87) International publication number: WO 2010/106208

(57) **Abstract**

A floating platform for wind energy extraction, comprising a structure (S) which is the support for the assembly (P) made up of a wind turbine tower (3), a nacelle (2) and its corresponding rotor blades (1), whereby the support structure (S) is formed by an upper structure (4) which joins the assembly (P) to the floating tank (5), which is, in turn, joined by means of a lower structure (7) to the ballast tank (8), and whereby said ballast tank (8) is configured to control the assembly's centre of gravity and adjust the flotation line by the distribution of mass.

## Description

The main object of the present invention refers to a floating platform for the generation of electrical energy from wind. This platform can be applied in the field of renewable energies, specifically in the area of so-called off-shore wind energy, that is, at sea and far from the coast.

### PRIOR ART

Marine wind energy projects have higher installation, operation and maintenance costs than those onshore. The foundations for marine wind turbine towers account for a major part of this initial outlay, which increases with depth, with the result that, currently, at a depth of 50 metres or more, it is economically favourable to use floating platforms.

It is increasingly difficult to find suitable sites for the installation of onshore wind turbines. Consequently, the international tendency is for marine wind farms to be installed in the national waters of each country. However, in many places the water reaches a depth of 50 metres a few kilometres from the shore. As a result, to install a significant number of marine turbines, we need technical solutions allowing the installation of wind farms in seas with depths of greater than 50 metres. The most promising idea from the point of view of efficiency is the development of a floating structure that supports a wind turbine. Marine wind energy resources are more abundant and continuous than those on shore, which is why it is a great source of renewable energy which has yet to be exploited on a large scale in these types of sites.

The floating platform which is the object of this invention consists in a structure capable of supporting the weight of the rotor, turbine and wind turbine tower by means of a float, almost irrespective of the depth of the sea. Although there is currently no similar structure in operation, there are precedents in this field of application.

Thus, patents WO2006132539 and US20070228739 describe two structures whose angles of heel are very high, due to the fact that they do not contemplate the generation of an adequate righting torque. This impedes the proper exploitation of wind energy by the wind turbine, giving very low yields which can make both systems economically unviable. Moreover, in the case of patent WO2006132539, part of the structure is made from concrete and, given the necessary volume in an actual construction, it could make the building and transport difficult, given its weight and considering that the difference in cost with certain types of steel is very low. In addition, in the case of patent US20070228739, wind energy is used to power an internal generation process of another type of energy and not for its extraction to the general supply network.

For its part, patent WO03004869 defines a single tank below sea level which acts as a float and ballast at the same time. If a structure of this type wishes to limit its angle of heel, it would need such a large volume that it would be technically and economically unviable to build. Limitation of said angle of heel and, consequently, its stability, must be achieved by means of a restoring torque due to the weight/floatability forces torque and the separation of said forces. In the absence of a stability system made up of differentiated structures for the floatability of the system, such as a floating tank and a ballast tank, it is not possible to obtain great yields, based on smaller dimensions and lower costs for similar generated power. Both structures need to be separated by means of a lower structure, thereby raising the distance between the restored forces and requiring less force for the same restoring torque.

Lastly, patent US20060165493 describes a system based on three floating supports, with the resulting proportional rise in costs.

### DESCRIPTION OF THE INVENTION

The floating platform that is the object of the invention is made up of a semi-submerged structure which is anchored to the sea bed by means of a mooring kit. The whole system generates a righting torque thanks to an adequate distribution of weight and volume that guarantees the working of the wind turbine with angles of heel below 10°. The entire structure and its purpose is in itself a novelty, given that no similar structure is currently in operation. This invention solves the problems that arise in seas with depths above 50 m, where it is economically unviable to install wind farms.

The system's stability is attained thanks to the restoring torque due to the weightfloatability forces torque, and the separation of said forces. The present invention proposes, as a main difference, the creation of a stability system made up of differentiated structures for the floatability of the system - floating tank - and ballasting of the same - ballast tank -, located in the upper part in the case of the float and in the lower part of the stability system for the ballast tank. Both structures are separated by means of the inferior structure, thus increasing the distance between the restoring forces and requiring less force for the same restoring torque. This set up implies higher yields than those proclaimed in the documents reflecting the status of the technique, requiring smaller dimensions and, consequently, lower costs for an equivalent generated power.

The system which is the object of this invention is made up of an upper structure that joins the wind turbine tower to a float tank. The upper structure is made of steel and is joined to the wind turbine tower and the float by means of bolting flanges. Its purpose is to ensure at all times that the tower is above the water and the float submerged. This design ensures the floating structure is independent of the tower required for each wind turbine. In addition, the weights and volumes calculated ensure that the float is submerged, which is an indispensable condition to ensure inclinations of below 10° and to ensure the proper working of the wind turbine.

The connection between the float tank and the ballast tank is made by means of a central structure. This element is made from steel plate and is tapered with a greater diameter at the connection with the float than at the connection with the ballast. This part ensures the transmission of forces due to righting torque which stabilises the system as well as providing a considerable proportion of the flotation. Internally, it has a system which allows flooding and partial emptying for the necessary adjustment of the flotation line. This flotation line adjustment system is a major innovation for the viability of the assembly of the entire structure.

The ballast tank is a container in charge of storing ballast (which can be sand) in such a way that it allows the centre of gravity of the entire structure to be lowered. This container is metallic and has several compartments so that it can be filled in a controlled fashion. This system of adding and removing ballast allows the assembly and installation of the entire system and is a novelty in structures with these characteristics.

It is tethered to the sea bed by means of three moorings which have an initial preload with an aim to reducing the shifts in the entire system when it acts on the force of the waves or wind. The moorings are tethered to the sea bed by means of ballasts or anchors depending on the type of seabed and the depth of the installation site. Given the importance of the anchorage system as an integral part of the balance of weights and volumes of the whole system, and given its importance in overall stability, this system is novel for its specific characteristics.

The advantages afforded by the system described herein lie in the fact that the restoring moment of the support for a given size of float is maximised. The aim is to attain the maximum possible separation between the elements that provoke flotation and the elements that stabilise, thus rising the system's restoring torque.

The range of use of the system is very broad, from depths of 50 metres to depths of several thousand metres. The invention described manages to increase the range of use to zones with depths of less than 100 metres, which is why supports capable of functioning in depths of up to 50 metres can be obtained, making lightweight, modular supports that facilitate logistics and reduce costs.

The variation in the thrusts on the floating platform due to variations in the sea level (such as waves, tides and others) is drastically diminished, as the greater volume of flotation is concentrated in the float and this is far from the flotation line.

The structure has greater transparency to waves and the currents in the areas where volume is not strictly necessary, as, for example, in the lower structure (the area between the float and the ballast). This contributes to a reduction in the floating platform movements and, consequently, an improvement in its performance with respect to other solutions.

The large diameter of the float tank with respect to other parts of the structure is used as a point of connection of the moorings, and affords a considerable restoring torque for the rotation of the floating platform on its own axis.

### BRIEF DESCRIPTION OF THE FIGURES

Below is a very brief description of the drawings which help to understand the invention and which are expressly related with an embodiment of said invention which is presented as a non-limiting example of the same.

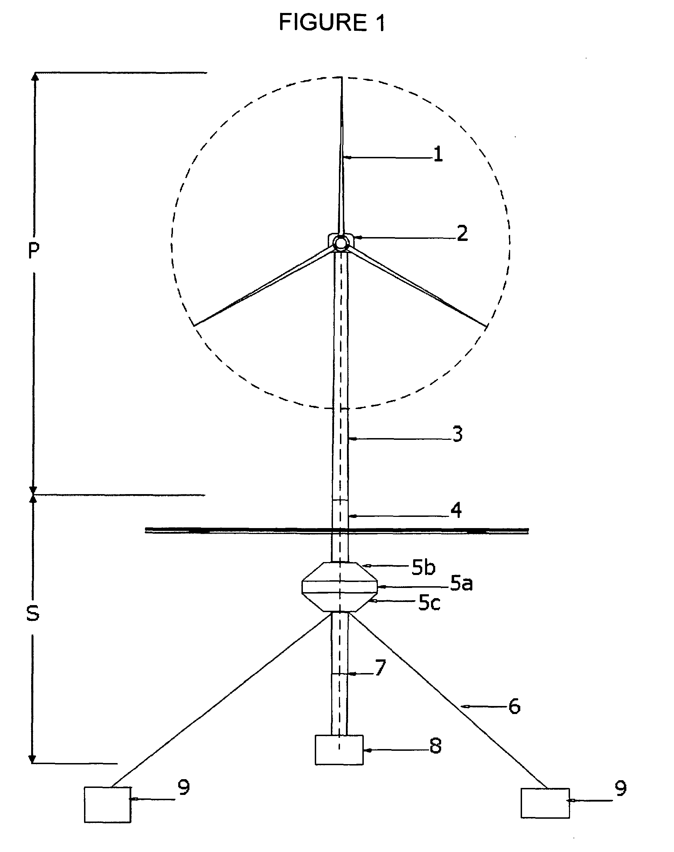

FIG. 1 shows a front view of the floating structure capable of supporting a wind turbine which is the reason for the invention.

### PREFERRED EMBODIMENT OF THE INVENTION

As can be seen in figure 1, the floating platform for the extraction of wind energy proposed herein is made up of an upper structure (4) which joins the wind turbine tower (3) to the float tank (5). The upper structure (4) is made of steel and is joined to the wind turbine tower (3) and to the float (5) by means of bolting flanges. Its purpose is to ensure at all times that the wind turbine tower (3) is above water and the float (5) is submerged.

The currents exert drag force on the structure which depends on the size of the current and the cross-sectional area exposed to the same. On the other hand, the structure is subjected to the action of the waves which again exert drag force and afford the system oscillatory movements. These forces are greater on the surface and diminish as one goes deeper and are practically null on the seabed. With an aim to reducing the action of the currents and waves on the structure, an upper section (4) is proposed to act as an air-water interface and has a cross-section area equal to or smaller than that of a cylinder of the tower's base diameter. The forces that the currents and waves may exert on the structure are thus minimised and consequently its movements. Possible alternatives for the upper structure (4) are cylinder-shaped or tapered solutions with a small diameter or solutions based on lattice tubes that have an even smaller cross-section area. This upper structure rises approximately 15m above the surface of the water and extends 20m under the water, thus covering the area in which the force of the current and waves is greatest. On the other hand, the up and down movement of the floating platform is related to the section or area of this upper structure on the flotation line. A smaller area in this section provokes little change in the system's floatability on the passing of the wave; with the result that the platform's up and down movement is reduced.

The float tank (5) is made up of a cylinder (5a) joined to two tapered ferrules (5b, 5c) which enable the rigid connection between this element and the upper structure (4) and the lower structure (7). The greatest percentage of the system's flotation is concentrated in the float tank (5). The float (5) is made up of a steel hull internally reinforced by bulkheads in both directions. The connection with the upper (4) and lower (7) structures is made by means of bolting flanges.

The float tank (5) is in charge of affording the system floatability. Said float (5) is made up of a watertight structure full of air, joined, above, to the upper structure (4) and, below, to the lower structure (7). In addition, it has a system of forces which allows it to transmit the mechanical solicitations of the upper structure to the lower structure, with the whole assembly acting as a solid rigid body. The separation between the float tank (5) and the ballast tank (8), that is, the length of the lower structure (7) is fundamental to increase the restoring torque of the floating platform and its performance, performance being understood as the weight of the structure in relation to the restoring torque that it affords. In other words, it can be said that, once a restoring torque has been established, the volume of float required for the proposed platform is less the greater the length of the lower structure, performing far better than other solutions.

The float tank (5) and the ballast tank (8) are joined by means of a lower structure (7). This element is made of steel plate and is tapered in shape, with a greater diameter at the connection with the float (5) than at the connection with the ballast (8). This part ensures the transmission of forces due to the righting torque which stabilises the system as well as contributing considerable flotation. Internally, it has a system which allows flooding and partial emptying for the necessary adjustment of the flotation line.

The ballast tank (8) is a container in charge of storing ballast made up of a liquid (water) mixed with a solid material (which can be sand) in such a way that it allows the centre of gravity of the entire structure to be lowered. This container is metallic and has several compartments so that it can be filled in a controlled fashion.

With an aim to reducing the action of the currents and waves on the lower structure, cylindrical, tapered, solutions are proposed or based on lattice tubes or mixed solutions, that is, an upper section (4) based on lattice tubes and a lower section (7) based on cylinder or stepped tapers. The object is to reduce, to the greatest extent possible, the surface area exposed to the action of currents and waves. The forces that the currents and waves may exert on the structure are thus minimised and, consequently, its movements and, therefore, the platform's performance is enhanced. This lower structure (7), as has been pointed out, is in charge of separating the float tank from the ballast area, whereby the distance between the restoring forces is increased and, consequently, greater restoring torques are achieved for a given floatability. This implies smaller and more lightweight structures, if the restoring torque is fixed. The performance of the system, measured as restoring torque against structure weight, is considerably heightened. The use of this element implies a substantial difference with respect to the solutions put forward by previous patents, as the improved behaviour of the platform added to the enhanced performance, implies smaller structures and, consequently, lower costs for wind turbines of similar size.

Anchorage to the sea bed is ensured by means of three anchorage lines (6) which have an initial preload with an aim to reduce the shifts in the entire system when it acts on the force of the waves or wind. The moorings are tethered to the sea bed by means of ballasts or anchors (9) depending on the type of seabed and the depth of the installation site.

## Claims

1. A floating platform for the extraction of wind energy, comprising a structure (S) which is the support for assembly (P) made up of a wind turbine tower (3), a nacelle (2) and its corresponding rotor blades (1) **characterised in that** the support structure (S) comprises an upper structure (4) which joins assembly (P) to the float tank (5), which, in turn, is joined by means of a lower structure (7) to the ballast tank (8), and whereby said ballast tank (8) and said lower structure (7) are configured to control the unit's centre of gravity and adjust the line of flotation by means of the distribution of mass.

2. A floating platform in accordance with claim 1, whereby the float tank (5) comprises a cylinder (5a) joined to a tapered ferrule (5b) which joins it to the upper structure (4) and to another tapered ferrule (5c) which joins it to the lower structure (7).

3. A floating platform in accordance with claims 1 and 2, whereby the lower structure (7) is made from steel plate and is tapered, with a greater diameter at its connection with the float tank (5) than at its connection with the ballast tank (8).

4. A floating platform in accordance with claims 1, 2 and 3 whereby the ballast tank (8) is hollow and can be filled and emptied in a controlled fashion in numerous watertight compartments.
